# EUROPEAN PATENT SPECIFICATION

(11) **EP 2 000 278 B1**
(45) Date of publication and mention of the grant of the patent: **31.03.2010**
(21) Application number: 08009583.9
(22) Date of filing: 27.05.2008
(51) Int. Cl.: B29C 45/16, B29C 45/40

(54) **Apparatus for co-moulding plastic materials**
Vorrichtung zur Mehrkomponentenkunststoffspritzgiessen
Appareil de co-moulage de matériaux plastiques

(30) Priority: 06.06.2007 IT TO20070393
(43) Date of publication of application: 10.12.2008
(73) Proprietor: BITRON S.p.A., 10042 Nichelino (Torino) (IT)
(72) Inventor: Barile, Marco, 12020 Rossana (CN) (IT); Allemano, Barbara, 12026 Piasco (CN) (IT)
(74) Representative: Lotti, Giorgio

(56) References cited:
- JP-A- 6 226 780
- JP-A- 7 088 884
- JP-A- 8 281 701
- JP-A- 9 052 255
- JP-A- 2003 094 484

## Description

The present invention relates to an apparatus for co-moulding items made of plastic material. In particular, the invention regards the production of items made of plastic to be used on motor vehicles, which bear a symbol, a logo, or else a particular graphic sign visible on the outer surface.

The main drawback of the current apparatuses used so far for co-moulding plastic materials consists in the fact that it may happen that, in the step of expulsion of the waste material from the mould, some parts are not totally expelled, with consequent problems of accumulation of material in the step of moulding of the next piece.

Such a drawback may be encountered with the apparatus indicated in the drawings and in the ensuing description by the definition of "known art".

JP-9-52255-A discloses an apparatus for co-moulding plastic products comprising a normal and a delayed extractor.

The purpose of the present invention is to overcome the aforesaid drawbacks by proposing a co-moulding apparatus with systems for expulsion of the waste material that will enable no residue of material to be left within the mould.

Said purpose is achieved by the present invention, the subject of which is an apparatus for co-moulding plastic material that has the characteristics specified in Claim 1.

Further characteristics and advantages will emerge clearly from the ensuing description referred to the attached plates of drawings, which are provided by way of non-limiting example and in which:
- Figures 1 to 6 illustrate a method of co-moulding obtained with an apparatus of the known art represented in schematic form; and

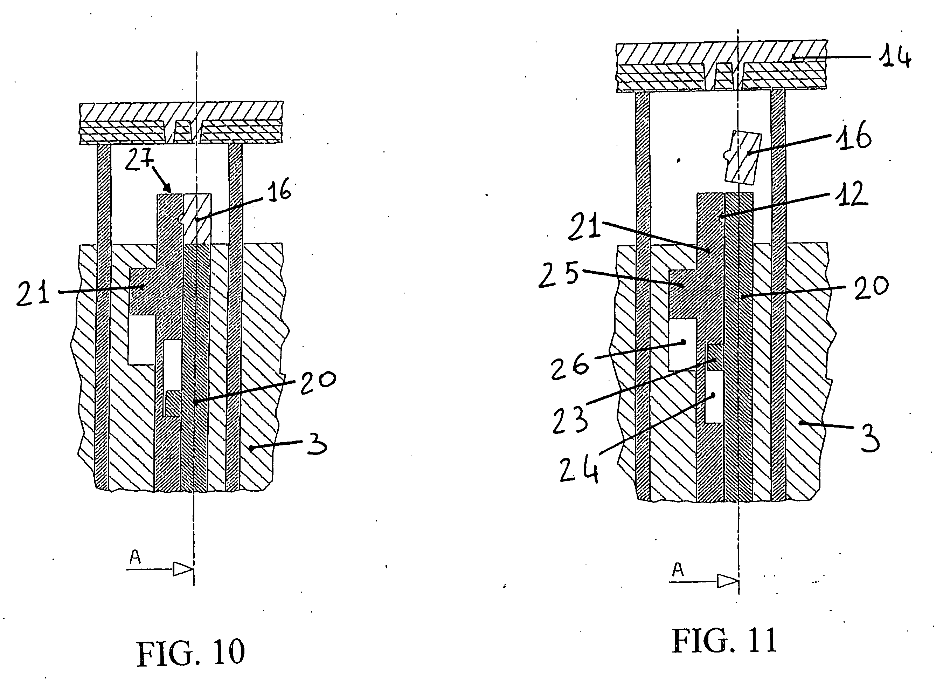

- Figures 7 to 11 illustrate a method of co-moulding obtained with an apparatus according to the present invention, represented in schematic form.

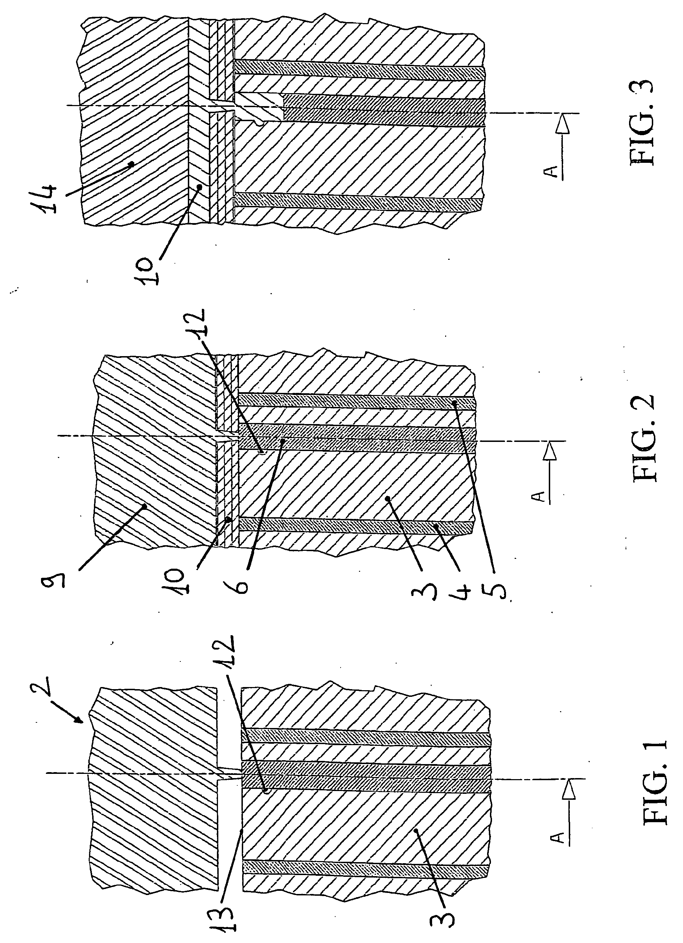

With reference to Figures 1 to 6, designated as a whole by 2 is an apparatus for co-moulding plastic material according to the known art, said apparatus being made up of a mobile base 3, comprising, in the example illustrated, axially sliding extractors, two of which are normal extractors 4 and 5, whilst a third is a delayed extractor 6. Set above the mobile base is a first-forming die 9, whilst visible between the mobile base 3 and the first-forming die 9 is the first piece of moulded material 10 (Figure 2). Present in the wall of the sliding seat of the delayed extractor 6 made in the mobile base 3 is a recess 12 open towards the extractor and made in the proximity of the top wall 13 of said mobile base 3.

Designated by 14 in Figure 3 is a second-forming die that rests on the first moulded piece, whilst designated by 16 is the second piece of plastic material that is co-moulded with the first piece 10.

In this step of the operations, the delayed extractor 6 is made to fit within the mobile part 3 for a length of travel such as to leave the recess 12 exposed, which, during the operation of co-moulding, is filled with the plastic material of the second-forming piece which also fills the entire compartment left free by the set-in extractor 7, forming a piece 16 that constitutes the processing waste.

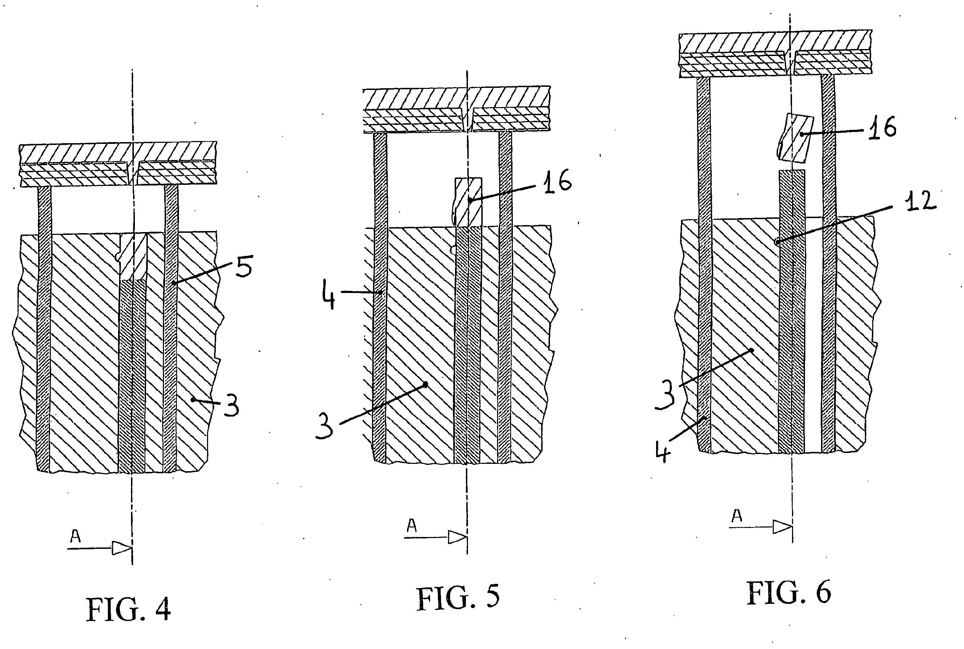

In the next step, illustrated in Figure 4, the extractors 4 and 5 push the co-moulded piece upwards whilst the waste piece 16, detaching from the co-moulded piece, remains within the mobile base 3, withheld therein by the undercut constituted by the recess 12. The co-moulded piece can now be removed from the mould, whilst the piece 16 is extracted from the base by means of the delayed extractor 6 (Figures 5 and 6). It is precisely in this step that part of the plastic material can remain within the recess 12, being torn away from the piece 16 during its expulsion from the mobile base 3.

It is clear that said remains vitiate the success of the next co-moulding.

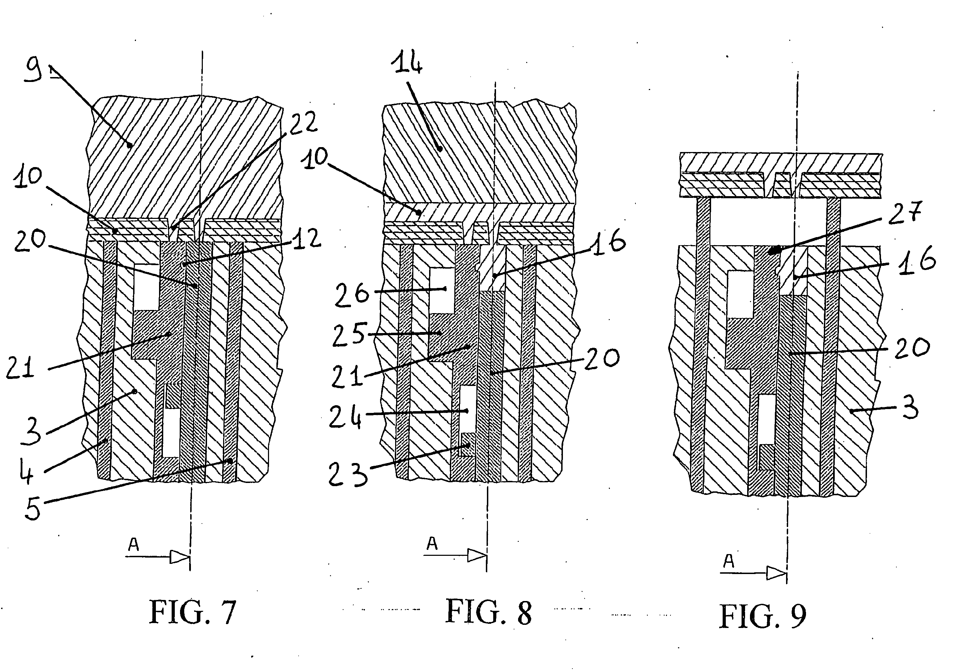

The aforesaid drawback is prevented using, for the method of co-moulding described previously, an apparatus according to the present invention. In the ensuing description, the parts of the new apparatus which are the same as those of the apparatus of the known art will be designated by the same numbers. Consequently, the apparatus according to the invention illustrated in the figures is made up of a mobile part 3 englobing the axially sliding extractors, two of which are normal extractors 4 and 5, whilst a third is a newly designed delayed extractor constituted by two single extractors 20 and 21 coupled together, one active (20), i.e., controlled by an actuator (not represented), and the other passive, i.e., drawn along by the first extractor or else pushed by a projection 22 present in the first-forming die 9 (Figure 7). It is clear that the number of the extractors, whether normal or delayed, depends upon the shape and the symbols or wordings that it is desired to obtain in the co-moulded piece. In the case illustrated, for the purpose of facilitating understanding and illustration, the extractors are just three, two normal ones and one delayed. The first active delayed extractor 20 has a projection or tooth 23 on its side wall, said tooth being received in a seat 24 having a substantially rectangular longitudinal section, made in the wall of the second passive extractor 21 facing the first extractor 20. The second passive extractor 21 in turn has a projection or tooth 25 on its side wall, received in a seat 26 of a substantially rectangular longitudinal section, made in the wall of the mobile base 3, against which said second extractor 21 slides. Set above the mobile part is the first-forming die 9, whilst visible between the mobile part 3 and the die 9 is the first piece of moulded material 10 (Figure 2). Made in the wall of the passive delayed extractor 21 facing the extractor 20 and against which said extractor slides, in the proximity of the top wall 27 of said delayed extractor 21, is a recess 12 open towards the wall of the extractor.

The operations to be performed for obtaining a co-moulded product are substantially the same as those described previously for the apparatus of the known art, up to the step in which the extractors 4 and 5 push the co-moulded piece upwards, and the waste piece 12 remains in a position withheld by the recess 12. The only appreciable difference consists in the fact that the extractor 20 slides downwards until the tooth 23 comes to bear upon the bottom wall of the recess 24, and this to enable the formation of the piece 16 that will subsequently be torn away to enable formation of the graphic sign or wording co-moulded on the surface. In the next step, the delayed extractor 20 is activated with a thrust upwards, which brings about sliding of the piece 16, once again upwards, and draws along the second extractor 21 via the material of the piece 16 that has come to fill the cavity 12 in the wall of the second extractor. Said passive extractor terminates its travel when the tooth 25 comes to bear upon the front wall of the recess 26, whilst the first extractor terminates its travel when the tooth 23 comes to bear upon the front wall of the recess 24 made in the extractor 21.

In the meantime, the piece 16, which has come out of the base 3, drawing along with it the second extractor 21, is free to detach from the recess 12 and fall out of the apparatus without leaving any residue of material therein and in particular in the recess 12, it no longer being forced against it by the inner wall of the base 3. This new embodiment of the active and passive delayed extractors 20 and 21, consequently enables innumerable co-moulded pieces to be obtained without there being accumulation of waste material within the mould. Of course, the shape of the extractors is not binding for the purposes of the invention, and said extractors may be made with different shapes, as defined by the annexed claims.

## Claims

1. An apparatus for the production of co-moulded products made of plastic material made up, among other things, of a mobile base (3) comprising axially sliding extractors, at least one (4, 5) of which is a normal extractor and at least one (6) of which is a delayed extractor; a first-forming die (9) being set above the mobile base (3), said apparatus being **characterized in that** the delayed extractor (6) is formed by two single extractors (20, 21) coupled together, a first active delayed extractor (20), which has a tooth (23) on its side wall, slidingly received in a seat (24), made in the wall of the second extractor (21) facing the first extractor (20), and a second passive delayed extractor (21), which has a tooth (25) on its side wall, slidingly received in a seat (26), made in the wall of the mobile base (3), against which said second extractor (21) is slidingly housed.

2. The apparatus for the production of co-moulded products according to Claim 1, **characterized in that** the seats (24, 26), received in which are the two teeth (23, 25) of the single extractors (20, 21) have a substantially rectangular longitudinal section.

3. The apparatus for the production of co-moulded products according to Claim 1, **characterized in that** made in the wall of the passive delayed extractor (21) facing the active extractor (20) and against which said extractor slides, is a recess (12) open towards the wall of the active extractor and made in the proximity of the top wall (27) of said delayed extractor (21).

4. The apparatus for the production of co-moulded products according to Claim 1, **characterized in that** the two single delayed extractors (20, 21) are designed to slide individually or coupled together within the mobile base (3).

5. The apparatus for the production of co-moulded products according to Claims 1 and 3, **characterized in that** the passive extractor (21) is set in motion by the active extractor (20) via a waste piece (16) partially inserted in the recess (12).

6. The apparatus for the production of co-moulded products according to Claim 1, **characterized in that** the passive extractor (21) is pushed downwards via a projection (22) made in the first-forming die (9).

## Patentansprüche

1. Eine Vorrichtung zur Herstellung von gegossenen Produkten, welche aus einem Kunststoffmaterial hergestellt sind, aufweisend, unter anderem, eine bewegliche Basis (3) mit axial verschiebbaren Extraktoren, wobei zumindest einer (4, 5) von diesen ein normaler Extraktor und zumindest einer (6) von diesen ein verzögerter Extraktor ist, eine Erst-Form-Gussform (9), welche oberhalb der beweglichen Basis (3) angeordnet ist, wobei die Vorrichtung **dadurch gekennzeichnet ist, dass** der verzögerte Extraktor (6) durch zwei einzelne Extraktoren (20, 21) ausgebildet ist, welche miteinander verbunden sind, wobei ein erster aktiver verzögerter Extraktor (20), welcher einen Zahn (23) an seiner Seitenwand aufweist, verschiebbar in einem Sitz (24) aufgenommen ist, welcher in der Wand des zweiten Extraktors (21) ausgebildet ist, gegenüber dem ersten Extraktor (20), und wobei ein zweiter passiver verzögerter Extraktor (21), welcher einen Zahn (25) an seiner Seitenwand aufweist, verschiebbar in einem Sitz (26) aufgenommen ist, welcher in der Wand der beweglichen Basis (3) ausgebildet ist, gegenüber welcher der zweite Extraktor (21) verschiebbar untergebracht ist.

2. Vorrichtung zur Herstellung von gegossenen Produkten gemäß Anspruch 1, **dadurch gekennzeichnet, dass** die Sitze (24, 26), in welchen die zwei Zähne (23, 25) der einzelnen Extraktoren (20, 21) aufgenommen sind, einen im Wesentlichen rechteckigen LängsAbschnitt aufweisen.

3. Die Vorrichtung zur Herstellung von gegossenen Produkten gemäß Anspruch 1, **dadurch gekennzeichnet, dass** in der Wand des passiven verzögerten Extraktors (21), welche gegenüber dem aktiven Extraktor (20) angeordnet ist und gegenüber welcher der Extraktor verschiebbar ist, eine Aussparung (12) ausgebildet ist, welche in Richtung der Wand des aktiven Extraktors offen ist und welche in der Nähe der Stirnseite (27) des verzögerten Extraktors (21) ausgebildet ist.

4. Vorrichtung zur Herstellung von gegossenen Produkten gemäß Anspruch 1, **dadurch gekennzeichnet, dass** die zwei einzelnen verzögerten Extraktoren (20, 21) so ausgebildet sind, dass sie individuell oder miteinander verbunden innerhalb der beweglichen Basis (3) verschiebbar sind.

5. Vorrichtung zur Herstellung von gegossenen Produkten gemäß Anspruch 1 und 3, **dadurch gekennzeichnet, dass** der passive Extraktor (21) durch den aktiven Extraktor (20) über ein Abfallstück (16), welches teilweise in die Aussparung (12) eingesetzt ist, in Bewegung gesetzt wird.

6. Vorrichtung zur Herstellung von gegossenen Produkten gemäß Anspruch 1, **dadurch gekennzeichnet, dass** der passive Extraktor (21) mittels eines Vorsprungs (22) nach unten gedrückt wird, welcher in der Erst-Form-Gussform (9) ausgebildet ist.

## Revendications

1. Appareil de production de produits comoulés composés de matière plastique, qui est constitué, entre autres, d'un socle mobile (3) comprenant des extracteurs coulissant axialement, dont au moins l'un (4, 5) est un extracteur normal et au moins l'un (6) est un extracteur différé, une première filière de formage (9) étant agencée au-dessus du socle mobile (3), ledit appareil étant **caractérisé en ce que** l'extracteur différé (6) est formé par deux extracteurs simples (20, 21) couplés ensemble, dont un premier extracteur différé actif (20), qui présente une dent (23) sur sa paroi latérale, laquelle dent est reçue à coulissement dans un siège (24) agencé dans la paroi du second extracteur (21) qui fait face au premier extracteur (20), et un second extracteur différé passif (21), qui présente une dent (25) sur sa paroi latérale, laquelle dent est reçue à coulissement dans un siège (26) agencé dans la paroi du socle mobile (3) contre laquelle ledit second extracteur (21) est logé à coulissement.

2. Appareil pour la production de produits comoulés selon la revendication 1, **caractérisé en ce que** les sièges (24, 26), dans lesquels sont reçues les deux dents (23, 25) des extracteurs simples (20, 21), présentent une section longitudinale sensiblement rectangulaire.

3. Appareil pour la production de produits comoulés selon la revendication 1, **caractérisé en ce qu'**est prévu, dans la paroi de l'extracteur différé passif (21) qui fait face à l'extracteur actif (20) et contre laquelle coulisse ledit extracteur, un évidement (12) débouchant vers la paroi de l'extracteur actif et réalisé à proximité de la paroi supérieure (27) dudit extracteur différé (21).

4. Appareil pour la production de produits comoulés selon la revendication 1, **caractérisé en ce que** les deux extracteurs différés simples (20, 21) sont conçus pour coulisser individuellement, ou en étant couplés ensemble, à l'intérieur du socle mobile (3).

5. Appareil pour la production de produits comoulés selon les revendications 1 et 3, **caractérisé en ce que** l'extracteur passif (21) est mis en mouvement par l'extracteur actif (20) via une pièce de rebut (16) partiellement insérée dans l'évidement (12).

6. Appareil pour la production de produits comoulés selon la revendication 1, **caractérisé en ce que** l'extracteur passif (21) est poussé vers le bas via une protubérance (22) réalisée dans la première filière de formage (9).
